# EUROPEAN PATENT APPLICATION

(11) **EP 1 046 860 A2**
(43) Date of publication of application: **25.10.2000**
(21) Application number: 00303410.5
(22) Date of filing: 20.04.2000
(51) Int. Cl.: F21V 9/14

(54) **Polarising panel**

(30) Priority: 21.04.1999 GB 9908998
(71) Applicant: Morrey, Anthony John, Wolverhampton, West Midlands WV4 5LE (GB)
(72) Inventor: Morrey, Anthony John, Wolverhampton, West Midlands WV4 5LE (GB)
(74) Representative: Skinner, Michael Paul

(57) **Abstract**

A polarising panel 10 is for use with a light fitting (not shown) such as a luminaire. A middle layer 12 is covered by an inner layer 14 and an outer layer 16. At least the middle layer 12 is formed to provide reflux polarisation of light from the luminaire, as indicated schematically at 24. This results in the panel transmitting light which is at least partially polarised, resulting in reduced glare. The panel is constructed substantially without air gaps between the layers of the panel, minimising spurious reflections, refractions and other causes of light loss.

## Description

The present invention relates to a light polarising panel for use with light fittings such as lamps, luminaires and the like.

It is desirable in many situations to provide a diffuser or screen for a light fitting, to cut out glare produced by the fitting. Lighting diffusers and screens are commonly used to reduce the amount of glare emitted from lamps. A diffuser or screen is fitted into the aperture within which the light fitting is housed, or fitted to the front of the light fitting, so that light emitted by the light fitting will pass through the diffuser or screen. Anti-glare properties of these diffusers or screens is usually obtained by using semi-opaque material, such as glass or plastic. This reduces the emitted glare, but also reduces the amount of emitted light, so that at least part of the output of the light fitting is wasted.

The present invention provides a light polarising panel for use with a light fitting, comprising a plurality of layers and including at least one layer which provides reflux polarisation of light from the light fitting, to transmit light which is at least partially polarised, the panel being constructed substantially without air gaps between layers of the panel.

Preferably the panel comprises a first layer which has a structure causing reflux polarisation within the body of the layer. The first layer may have a cellular structure of a plurality of layers of non-circular cells. The cells may be generally elliptical. Preferably, the non-circular cell shape is produced by mechanical distortion of the first layer. The first layer may comprise a synthetic plastics material formed to contain a plurality of bubbles or cavities, the material being stretched to deform the bubbles or cavities to form aligned non-circular shapes. The first layer is preferably maintained in a stretched condition by attachment to another layer of the panel.

The panel preferably also comprises a second layer formed to collect light incident on the panel at angles outside a predetermined range of angles, and to redirect at least some of the light to the first layer within the predetermined range. The range of angles is preferably defined by Brewsters angle. Preferably, the range of angles is defined by Brewsters angle for the interface between the first layer and the second layer. Preferably, light is reflected back through the second layer towards the light fitting if incident on the interface at an angle greater than Brewsters angle from the perpendicular to the first layer at the point of incidence. The second layer is preferably prismatic in form. The second layer may provide mechanical protection for a face of the first layer.

Preferably a protective member is provided for mechanical protection of that face of the first layer which is remote from the light fitting, in use. The protective member is preferably substantially optically clear.

The panel is preferably sealed around its edges after evacuation to remove any air gaps between adjacent layers of the panel.

Embodiments of the present invention will now be described in more detail, by way of example, and with reference to the accompanying drawings, in which:-
Fig. 1 is a perspective view of one edge of a panel according to the invention, partially cut away;
Fig. 2 is a section through the panel of Fig. 1, along the line 2-2 in Fig. 1; and
Figs. 3 and 4 are highly schematic diagrams illustrating rays passing through panels according to the invention.

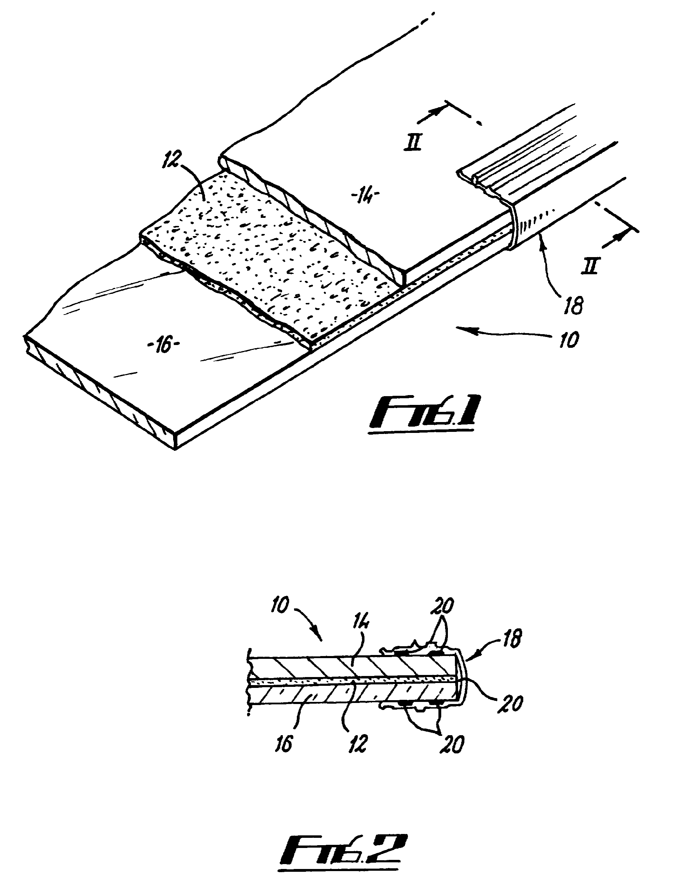

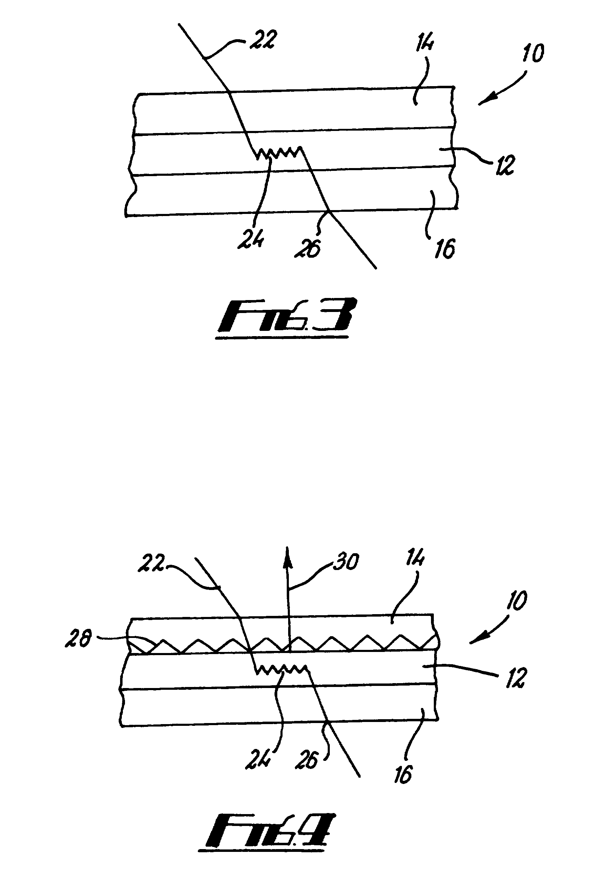

The light polarising panel 10 (Figs. 1 and 2) is for use with a light fitting such as a luminaire (not shown) and comprises a plurality of layers 12, 14, 16 in the form of a middle layer 12 covered by an inner layer 14 which, in use, would face the light source of the luminaire, and an outer layer 16 facing the space being illuminated. At least the middle layer 12 is formed to provide reflux polarisation of light from the luminaire, to transmit light which is at least partially polarised, as will be described. Furthermore, and in accordance with the invention, the panel is constructed substantially without air gaps between the layers 12, 14, 16 of the panel.

In more detail, the middle layer 12 is a layer of polarising material. In this example, the material is of a cellular nature in which several layers of cells are formed. These cells may be provided by cavities or bubbles within the material, which may be a synthetic plastics material such as polymethylmethacrylate. This material can be air-blown while warm, to produce microscopic bubbles within its structure. Initially, these bubbles will tend to be spherical. However, stretching the material will tend to deform the spherical cavities into elliptical cavities aligned along the direction of stretching, and thus aligned with each other. All of the cells of each layer of cells will become elliptical and aligned in this manner.

This structure within the middle layer 12 will give rise to reflux polarisation, as will be described.

The mechanical stretch on the middle layer 12 is maintained by the structure of the rest of the panel, which also serves to provide mechanical protection to the layer 12. Thus, the inner layer 14, which will face the light source during use, will provide protection against mechanical damage, water, ultraviolet light, cleaning fluids used on the light fitting, fire, smoke and the like. Likewise, the other face of the middle layer 12 is similarly protected by the outer layer 16, which is preferably of clear polycarbonate material to provide good mechanical strength while being substantially optically clear. In addition, the use of an outer layer 16 of polycarbonate of sufficient thickness, such as about 3mm, will result in the screen meeting fire regulations for light fittings, in many situations.

The mechanical stretch applied to the middle layer 12 during the construction of the panel 10 may be maintained by attaching the layer 12 to the outer layer 16, such as by adhesive or by mechanical fixing at the edges of the layer 16. Alternatively, appropriate choices of material may allow surface tension between the layer 12 and the layer 16, which are intimate contact with no air gaps between, to provide sufficient force to maintain the mechanical stretch.

The middle layer 12 will also be in intimate contact with the inner layer 14, again ensuring that there are no air gaps between these layers.

Thus, when the panel 10 is constructed, the middle layer 12 will first be stretched to the required degree and the layers 14, 16 will then be offered to the middle layer 12, into intimate contact with respective faces of the layer 12. This assembly operation may be carried out in a vacuum or at low pressure so that all liquid or gas between the layers 12, 14 and 12, 16 is expelled as the panel 10 is assembled. In particular, no entrapped air will then remain between adjacent layers of the panel 10. A channel-section frame member 18 is then provided along the edges of the panel 10 to retain the layers 12, 14, 16 in position, and also to provide a seal around the edges, to prevent ingress of air, liquid or the like. A sealant material such as silicone sealant may be used at positions 20 to further assist in sealing the edge of the panel 10.

In addition to the protective function described above, the inner layer 14 may also be formed to provide an optical function within the panel 10, as can now be described with reference to Figs. 3 and 4.

First, it is convenient to describe Fig. 3, which shows an arrangement in which each of the panels 12, 14, 16 is in the form of a simple planar sheet. A light ray 22 is shown highly schematically in Fig. 3, being incident on the inner layer 14 after arrival from the light source covered by the panel 10. The ray 22 refracts at the exposed face of the layer 14 and then passes through the layer 14 to enter the middle layer 12. The ray 22 then interacts with the structure of the layer 12, in particular the aligned elliptical cells formed by the cavities, in order to create reflux polarisation within the layer 12.

Reflux polarisation is an effect invented by Dominique Arago in 1812, in which multiple reflections and refractions at different layers give rise to a transmitted ray which is increasingly strongly polarised as the number of layers, and hence the number of reflections, increases. This effect is illustrated schematically at 24, by a zigzag line indicating multiple reflections of the reflux polarisation.

The resultant polarised light leaves the layer 12 through the layer 16 and is substantially unaffected by the material of the layer 16, by virtue of its optical clarity. The ray 22 then leaves the panel 10 at 26.

The result is a ray which is strongly polarised perpendicular to the plane of incidence (i.e. perpendicular to a plane which is perpendicular to the panel 10 and contains the initial line of the ray 22). Light polarised in this manner is found to reduce glare from light fittings, particularly from overhead light fittings.

The effect can be enhanced by the arrangement of Fig. 4, in which the inner layer 14 provides an additional effect of an optical nature. The face 28 of the inner layer 14, adjacent the middle layer 12, is prismatic in form, having pyramids or triangular ridges formed across the face 28. The resulting prismatic effect causes rays passing through the layer 14 to be redirected. In particular, rays may be redirected to reach the middle layer 12 with an angle of incidence which, when measured to the direction 30 normal to the layer 12, is less than the Brewster angle at the surface of the middle layer 12. Light which is incident at an angle greater than the Brewster angle will tend to be reflected back to the inner layer 14. Redirecting light from outside this range of angles into the range of angles will result in increased brightness from the light fitting.

It has been found that the apparatus described above will reduce glare by virtue of the polarisation effect, but without unacceptably reducing the intensity of emitted light. In particular, light which is reflected back to the light fitting can be re-reflected to the panel, at a different angle of incidence, in order to be transmitted after polarisation as described. Polarised light is not lost by spurious reflections and refractions as would occur, for instance, if air gaps were present within the panel.

In summary, the device described consists of at least two layers of translucent material, forming the top and bottom layers of the structure, sandwiched between which is at least one pre-tensioned layer of polarising material of a cellular nature, with layered elliptical cells. The cellular layer will partially polarise the light emitted by the light fitting, and reduce the glare. The layers of the panel are fitted closely together by the use of external vacuum or low pressure, such as a vacuum pump, to remove voids between layers of the panel, thus expelling all possible entrapped air or fluid (although some fluid will remain between the inner layer and middle layer in the event that the inner layer is prismatic as shown in Fig. 4). The panel is sealed around its edges by the channel section 18 which may be made from plastic or other suitable material and preferably contains an atmospheric seal, such as from silicone or other suitable material to prevent the ingress of air or fluids.

Many variations and modifications can be made to the apparatus described above, without departing from the scope of the present invention. In particular, other materials could be used for the middle layer 12, such as a closed cell polythene or any other suitable material, particularly one having mainly elliptical cells layered above each other. A material or structure which does not require mechanical stretching in order to achieve a reflux polarising structure could be used. The thickness of the polarising layer could be changed to change the degree of polarisation achieved but is preferably approximately lmm thick. The polarising layer may be stretched while cold or after heating and is preferably stretched to a point just below breaking point, to maximise the polarising effect achieved. It is preferable for the elements of the panel to be able to transmit light across the frequency range of 285nm to 785nm.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A light polarising panel for use with a light fitting, comprising a plurality of layers and including at least one layer which provides reflux polarisation of light from the light fitting, to transmit light which is at least partially polarised, the panel being constructed substantially without air gaps between layers of the panel.

2. A panel according to claim 1, wherein the panel comprises a first layer which has a structure causing reflux polarisation within the body of the layer.

3. A panel according to claim 2, wherein the first layer has a cellular structure of a plurality of layers of non-circular cells.

4. A panel according to claim 3, wherein the cells are generally elliptical.

5. A panel according to claim 3 or 4, wherein the non-circular cell shape is produced by mechanical distortion of the first layer.

6. A panel according to any of claims 2 to 5, wherein the first layer comprises a synthetic plastics material formed to contain a plurality of bubbles or cavities, the material being stretched to deform the bubbles or cavities to form aligned non-circular shapes.

7. A panel according to claim 6, wherein the first layer is maintained in a stretched condition by attachment to another layer of the panel.

8. A panel according to any preceding claim, wherein the panel also comprises a second layer formed to collect light incident on the panel at angles outside a predetermined range of angles, and to redirect at least some of the light to the first layer within the predetermined range.

9. A panel according to claim 8, wherein the range of angles is defined by Brewsters angle.

10. A panel according to claim 8 or 9, wherein the range of angles is defined by Brewsters angle for the interface between the first layer and the second layer.

11. A panel according to any of claims 8 to 10, wherein light is reflected back through the second layer towards the light fitting if incident on the interface at an angle greater than Brewsters angle from the perpendicular to the first layer at the point of incidence.

12. A panel according to any of claims 8 to 11, wherein the second layer is prismatic in form.

13. A panel according to any of claims 8 to 12, wherein the second layer provides mechanical protection for a face of the first layer.

14. A panel according to any preceding claim, wherein a protective member is provided for mechanical protection of that face of the first layer which is remote from the light fitting, in use.

15. A panel according to claim 14, wherein the protective member is preferably substantially optically clear.

16. A panel substantially as described above, with reference to the accompanying drawings.

17. Any novel subject matter or combination including novel subject matter disclosed herein, whether or not within the scope of or relating to the same invention as any of the preceding claims.
